# EUROPEAN PATENT APPLICATION

(11) **EP 1 943 915 A2**
(43) Date of publication of application: **16.07.2008**
(21) Application number: 08075008.6
(22) Date of filing: 04.01.2008
(51) Int. Cl.: A44B 18/00, A45C 13/10, A47G 1/17, A47G 27/04, E04F 13/08, F16B 5/07

(54) **Mountable and detachable fastening mechanism for basic structures**

(30) Priority: 09.01.2007 NL 1033196
(71) Applicant: Van Lokven, Johannes, Theodorus, Gerardus , Maria, 5247 WT Rosmalen (NL)
(72) Inventor: Van Lokven, Johannes, Theodorus, Gerardus , Maria, 5247 WT Rosmalen (NL)

(57) **Abstract**

The invention relates to a fastening mechanism (1, 101, 201) for mounting objects (4) to a basic structure (8) of a surface, in which said fastening mechanism (1, 101, 201) has hook-shaped protrudings (11, 107, 204) which engage into a, preferably, loop- or network structure of the said basic structure (8) and can thus be fixed to all kinds of objects against walls, ceilings and floors.

## Description

The invention relates to a mechanism for mounting objects to a basic structure or carrier. This structure is necessary to create a fastening. The fastening mechanism must be used on an object or is part of it, by which the object is constructed to be mounted or detached respectively to or from the basic structure. By tensioning and maintaining the tension of the adhesive the invention is particularly suitable for mounting three-dimensional objects and applicable against walls, ceilings and on the floor, if provided with the basic structure.

Various systems for detachably fastening objects to basic structures are already known. There is, for example, an adhesive tape, trade name Velcro, with which all kinds of objects can be mounted to and detached from a basic structure. This application has some disadvantages. When, for example, an object is placed in a corner, only one side can be used effectively. The load bearing capacity of Velcro is even more enhanced by the downward force. For the adhesive, this characteristic is advantageous in the vertical direction. However, the gravity does not provide any advantage in the horizontal direction. By this, for example, objects provided with Velcro detach easily from basic structures used against ceilings. Meanwhile, there is Velcro with a very strong adhesive. However, during removal more force is needed, with the possibility that the basic structure is damaged and detaching does appear to be more unpractical.

It is the aim of the present invention to provide a new possibility for mounting objects to a basic structure, in which said disadvantages are solved.

The invention is a part of a system, mainly characterized in that at least a part of the basic structure is provided with several loop-shaped protrudings, and in which the loop-shaped basic structure and hook-shaped protrudings are arranged in such a way that they can be forced into mutual cooperation. A first advantage of using the pole-shaped protrudings is that an object can be fastened detachably on any position to the basic structure. By this, positioning the object in relation to the basic structure is not limited to a discreet number of mounting locations beforehand. Accordingly a great choice is created with regard to where the object is mounted to the basic structure, as a result of which the system functions relatively flexible.

Another advantage of the system according to the invention is, that the created connection between the fastening element and the basic structure is relatively very stable and solid due to the pole-shaped protrudings. This, for example, makes it possible to connect rather heavy objects at a fixed position with an upright (vertically or diagonally orientated) or are preferably meant loops, lying (horizontally or diagonally orientated) basic structure in a durable and reliable way.

Another advantage of the system according to the invention is that many objects are mountable to the bearing structure, in which mass, dimensioning and design of the objects usually play a minor part. In the event of the basic structure with pole-shaped protrudings (preferably loops) have a varied height and are flexibly positioned at several directions, as a result of which per hook the adhesive chances increase. The hooks of the mechanism are J-shaped and constructed to engage in the loops of the basic structure and anchor lastingly. By releasing the tension the hooks detach easily. Instead of hooks, also teeth or pins can be used, for instance depending on the way the tension is applied.

By using this system in or on objects, the user gets the possibility to easily mount or detach objects against a wall, floor or ceiling. It concerns a strong adherence, in which the number of hooks, the rigidity and the loop structure thereof play a part. By means of (in general) tension means, such as elastic and spring material, but also by means of manual and/or mechanical and/or magnetical influences, whether or not generated and/or maintained electrically, a greater adherence is created. The hooks in the fastening elements can be directed outwards (push tension) as well as inwards (tensile stress). Also, the hooks can be arranged rotatable, through which these hooks can be fastened and detached into the loops at the side of the object. To avoid rotating back, a securing device is optional. This securing can also be used on the other fastening elements. Depending on the situation where this application will be used, the hooks should be made of a somewhat flexible material for safety reasons. The size of the adhering elements and loops, are obvious relatively variable.

Some non-limitative application examples are shown on enclosed CD-Rom for clarification. The rotatable element shown, for example, can be added in or on objects and creates for the user, if the side panels are provided with a structure consisting of loops at the inner side of, for example, a closet, the possibility that beams can be placed or removed at every desired height. Furthermore, by adding this application an object can be placed in a corner, if the sides of the object pointing towards the corner are provided with such a mechanism and if this corner is provided with the basic structure. If a wall (ceiling or floor) is provided with the basic structure, an object provided with an internally used or externally applied mechanism can be anchored to the basic structure.

A second example is the fastening mechanism with a sliding system, in which the adhesive is kept in place by means of tension. This option offers the user the possibility to easily mount or detach objects provided with the fastening mechanism to a basic structure. The tension can also be maintained when a securing device or brake is used.

When no tension is used, objects provided with hooks at the backside can be effectively mounted to a wall in the basic structure, when the wall is placed vertically and due to gravity the object anchors firmly into the basic structure.

The disadvantage is that this object can be knocked off the structure. The advantage is a very simple adherence.

The above mentioned embodiments and those shown on the CD-Rom are only non-limitative exemplary embodiments of the system according to the invention. Said CD-Rom is submitted together with the Dutch Patent application nr. NL 1033196 on January 9th, 2007 at Octrooicentrum Nederland.

The preferred construction of the invention will be described by way of example, and with reference to the accompanying drawing.

In which:
- Fig. 1: shows a view in oblique projection of the fastening mechanism constructed with two blocks provided with an object according to a first embodiment of the invention;
- Fig. 2: idem as figure 1 according to a second embodiment;
- Fig. 3: shows a front view and partly horizontal cross-section of the fastening mechanism, constructed as single block according to a third embodiment of the invention; and
- Fig. 4A/B: shows a side view over the line IV-IV of figure 3 with retracted hook-shaped protrudings (figure 4A) and swivelled or rotated hook-shaped protrudings (figure 4B).

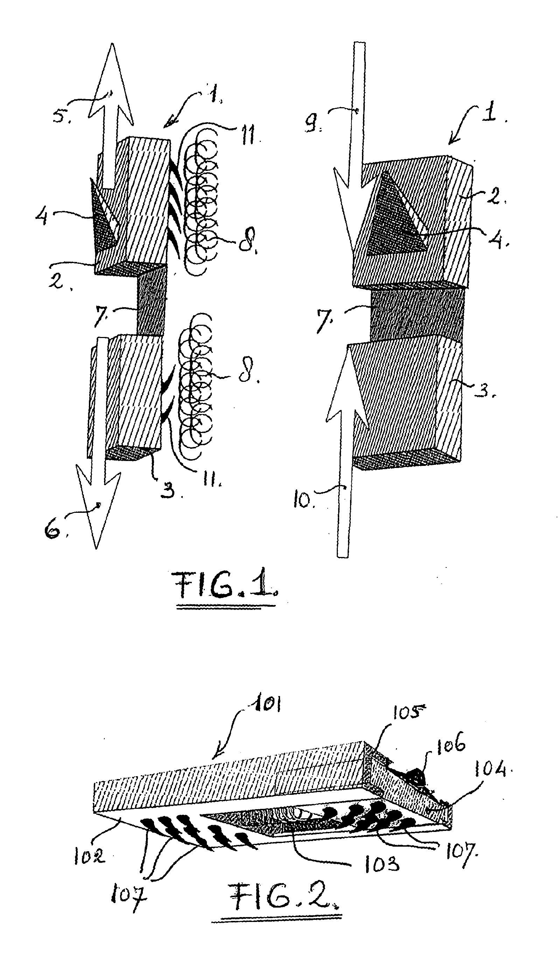

Figure 1 shows a view in oblique projection of the fastening mechanism 1 constructed with two blocks 2 and 3 provided with an object 4 (a hook). In the depicted left position the blocks 2 and 3 indicated by arrows 5 and 6 are pulled apart, in which the blocks 2 and 3 have a mutual resilient or elastic connection 7. In this retracted position the fastening mechanism 1 is pushed against the loop-shaped basic structure 8. Subsequently block 2 and 3 move towards each other (arrows 9 and 10) by the mutual resilient or elastic connection 7 and the hook-shaped protrudings 11 engage into said basic structure 8 of the surface (not indicated).

Figure 2 shows a second embodiment according to the invention of the fastening mechanism 101, working according to the same method as fastening mechanism 1. The fastening mechanism 101 has a fixed block 102 and block 104, connected by means of a spring 103 can be moved in a slide-shaped construction 105. The whole is provided with a control cam 106 and possibly a stop mechanism (not indicated) to fix block 104 in the slide. The hook-shaped protrudings 107 are mounted in the same way as described in figure 1.

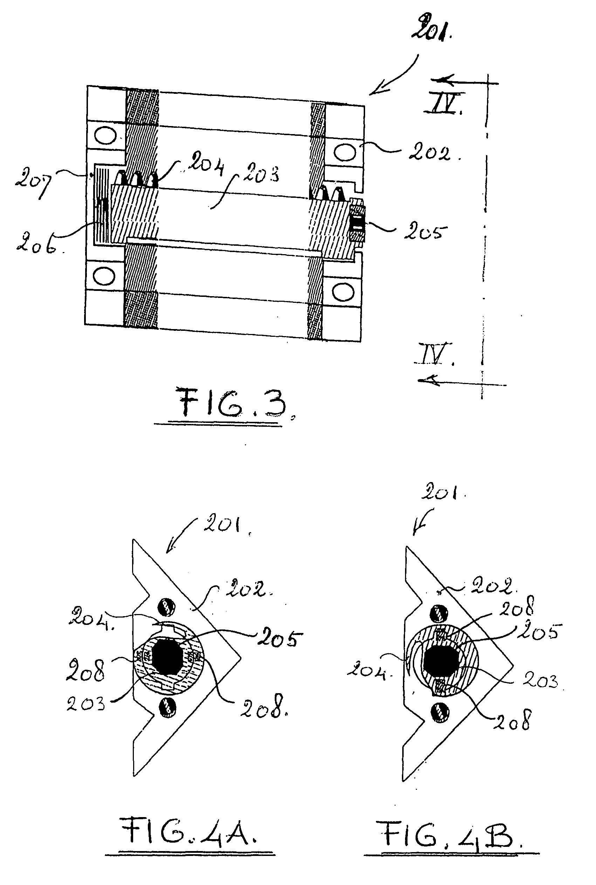

Figure 3 shows a front view and a partly horizontal cross-section of a fastening mechanism 201 as a single block 202 (see also figures 4A and 4B). The cylinder 203 can be rotated by means of an Allenkey in socket screw 205 and the hook-shaped protrudings 204 arranged in a row are inserted into the loop-shaped basic structure (not indicated) of the surface. The cylinder 203 is placed horizontally against the end wall 207 by means of a spring 206. By pressing the socket screw 205 with the cylinder 203 against the spring 206 the stop mechanism 208 is released and rotation of the cylinder can be achieved.

Finally it has to be emphasized, that the above description constitutes a preferred embodiment of the invention, but that obviously further modifications are possible without departing the scope of this patent description.

## Claims

1. Fastening mechanism coupled to objects in order to mount these mechanically detachable to a surface provided with a basic structure, **characterized in that**, said basic structure (8) consists of a layer with an elastic tensile strain resistant loop or network structure and that said fastening mechanism (1, 101, 201) consists of at least one block (3, 4; 102, 104; 202) provided with at least one pair of hook-shaped protrudings (11; 107; 204), which fasten themselves engageably in said basic structure (8).

2. Fastening mechanism as claimed in claim 1, **characterized in that,** said basic structure (8) is a carpet-like material with a loop-shaped surface structure.

3. Fastening mechanism as claimed in claim 1, **characterized in that**, said fastening mechanism (1) consists of two blocks (2, 3) provided with on one side a pair of hook-shaped protrudings (11) directed towards each other and which blocks (2, 3) are moveable towards or away from each other by means of a resilient or elastic connection (7).

4. Fastening mechanism as claimed in claim 1, **characterized in that**, said fastening mechanism (101) consists of two blocks (102, 104), in which the second block (104) is moveable in a slide (105) by means of a spring (103) towards or away from each other, depending on the direction of the hook-shaped protrudings (107).

5. Fastening mechanism as claimed in claim 4, **characterized in that**, the resilient force of the spring (103) for moving the blocks (102, 104) towards or away from each other, the block (104) can be secured in closed position by means of a stop mechanism.

6. Fastening mechanism as claimed in claim 1, **characterized in that**, said fastening mechanism (201) consists of a single longitudinal prismatic block housing a rotatable cylinder (203) provided with a row or pair of hook-shaped protrudings (204).
